# EUROPEAN PATENT SPECIFICATION

(11) **EP 4 002 045 B1**
(45) Date of publication and mention of the grant of the patent: **08.01.2025**
(21) Application number: 20209655.8
(22) Date of filing: 24.11.2020
(51) Int. Cl.: G05D 1/00

(54) **METHOD AND COMMAND CENTER FOR A TELE-OPERATED DRIVING OF A VEHICLE AND CORRESPONDING SYSTEM WITH A COMMAND CENTER AND A VEHICLE**
VERFAHREN UND KOMMANDOZENTRALE FÜR EIN FERNBEDIENTES FAHREN EINES FAHRZEUGS UND ZUGEHÖRIGES SYSTEM MIT EINER KOMMANDOZENTRALE UND EINEM FAHRZEUG
PROCÉDÉ ET CENTRE DE COMMANDE POUR LA CONDUITE TÉLÉCOMMANDÉE D'UN VÉHICULE ET SYSTÈME CORRESPONDANT DOTÉ D'UN CENTRE DE COMMANDE ET VÉHICULE

(43) Date of publication of application: 25.05.2022
(73) Proprietor: VOLKSWAGEN AG, 38440 Wolfsburg (DE)
(72) Inventor: Reimann, Daniel, 38100 Braunschweig (DE); Jornod, Guillaume, 10245 Berlin (DE); Pfadler, Andreas, 13357 Berlin (DE)

(56) References cited:
- WO-A1-2020/200534
- US-A1- 2020 041 995

## Description

The invention is concerned with a method for a tele-operated driving of a vehicle. The vehicle is controlled from a command center, e.g. a remote stationary control center, via a communication network. The method comprises that the command center transmits a steering command to the vehicle over the communication network to change a driving state of the vehicle (e.g. either turn left or right and/or either accelerate or break) in order to execute a driving maneuver. The invention also provides a command center for performing the method and a system for the tele-operated driving of a vehicle.

Tele-operated Driving (ToD) is a technology that is becoming a key enabler for automated driving, i.e. autonomous driving functions in vehicles. In addition to providing the support of a command center (CC) to solve deadlock situations, that is situation that the automated vehicle (AV) cannot solve by itself, tele-operated driving is becoming a legal requirement for automated driving in an increasing number of countries.

However, high latencies on the remote vehicle side must be expected. They are mainly caused by the delays coming from the controller, actuators and internal communications in the vehicle. These latencies introduce operating delays, especially, when the vehicle is standing still and the command center triggers the start of a drive, e.g. when a traffic light switches from red to green.

Document US 2020 / 0019166 A1 describes such a method for tele-operated driving of a vehicle. The vehicle is also an autonomous vehicle that may perform driving manoeuvers in an automated manner by itself, but if a deadlock situation is detected, the vehicle requests assistance from a remote assistor in a command center. The assistor is only able to select certain autonomous driving manoeuvers, i.e. the assistor is not able to manually perform single driving manoeuvers of an own choice, like, e.g., turning the driving wheel.

Document WO 2019 / 180700 A1 describes a system comprising a tele-operated vehicle, where a steering command for the vehicle may be generated by a remote artificial intelligence unit. A steering command may trigger a sequence of operations or tasks in the vehicle. This implies that when such a steering command is transmitted to the vehicle, the remote control center has to wait until the sequence of operations or tasks is executed, before the next steering command may be transmitted for adapting to the new driving situation resulting from the previous steering command.

Document EP 3 295 268 B1 describes an autonomous vehicle operated with guide assistance. The guide assistance may be provided by a human operator who is located remotely from the vehicle and operates a user interface that displays predetermined operations for which the operator can make a selection and the selected operation can then be converted to instructions for the autonomous vehicle. Thus, after selecting an operation, the operator has to wait until the autonomous vehicle has finished all the instructions of the selected operation before the next operation may be selected.

Document US 2020/041995 A1 discloses a method of remote operation of a vehicle, in which data sensor captured by the vehicle are sent via a communication link to a remote operator after having determined a latency time of the link. The data sensor are rendered to an operator display by taking into account of the latency time. In other words, the operator sees the sensor data as taken by the vehicle in a future location. The operator on the basis of said data can remotely control the vehicle by sending steering command through the communication link.

Document WO 2020/200534 A1 discloses a method of remote operation of a vehicle, in which the data sensor capture by the vehicle are sent to a remote operate with a priority which is given by the line of sight (to a display) of the operator.

Thus, in the prior art there is the problem that when a human operator triggers a steering command for changing the driving state of a tele-operated vehicle, for example for changing the driving speed and/or changing the driving direction, the set of instructions or tasks that need to be executed for changing the driving state may that numerous and slow that an unwanted or significant latency results from the moment the operator selects the steering command to the moment the new driving state is reached. One important example is the start of the tele-operated vehicle from a standstill, e.g. at a traffic light.

It is an object of the present invention to reduce the amount of time a human operator has to wait from the moment that the operator initiates a steering command for changing a driving state of a tele-operated vehicle until the new driving state is reached.

The object is accomplished by the subject matter of the independent claims. Advantageous developments with convenient and non-trivial further embodiments of the invention are specified in the following description, the dependent claims and the figures.

One aspect of the invention is a method for a tele-operated driving of a vehicle, wherein the vehicle is controlled from a command center, e.g. a remote station, via a communication network. The method comprises that the command center transmits a steering command to the vehicle over the communication network to change a driving state of the vehicle in order to execute a driving maneuver. The change of the driving state means that the steering command changes a driving speed and/or steering angle, e.g. by driving left / right, accelerating, braking the vehicle.

An operator in the control center should not experience a large latency from the moment the steering command is triggered to the successful execution of the steering command, i.e. the change of the driving state of the vehicle.

The invention is based on the following insight. The driving maneuver generally comprises a whole sequence of execution tasks or instructions or operations. One or some of these execution tasks actually do not change the driving state, but rather prepare the vehicle for changing the driving state. For example, before a steering is turned left or right, the vehicle needs to verify that no other traffic participant is close to the vehicle or located along the new driving direction. This can be done by an electronic processing circuitry of the vehicle for observing the environment. In a normal tele-operated driving according to the prior art, after receiving a steering command for turning left or right this would result in the described latency period that is needed for verifying that the environment is clear before the steering is actually turned or changed. This would result in the described latency period.

According to the invention, the execution tasks associated with a single steering command are split into two groups of tasks, namely the "preparation tasks" for initiating or preparing the driving maneuver and the actual "driving tasks" for actually or finally changing the driving state for the driving maneuver. Consequently, according to the inventive method, before the actual steering command is transmitted to the vehicle, the command center transmits a preceding separate "preparation signal" to the vehicle for triggering some or all of those of the execution tasks for which a current driving state of the vehicle remains unchanged (i.e. the preparation tasks that do not change the driving state) and afterwards, the following steering command comprises the at least one remaining final execution task (i.e. the driving tasks that change of steering angle, acceleration, braking) that causes the vehicle to actually change its driving state according to the driving maneuver.

This provides the benefit that when the operator in the control center actually triggers the steering command, the vehicle is able to react in less time or with less latency by immediately changing the driving state, as some or any preparation task (belonging to the driving maneuver) has already been triggered and executed due to the preceding preparation signal. For example, if the driving manoeuver is to turn left or right, the steering command would be the change of the steering angle, but the described verification that the environment to the left or right is clear of any other traffic participant can already be triggered in advance by the preparation signal.

According to the invention, the driving maneuver is a start / acceleration of the vehicle from standstill and the preparation signal triggers one or some or all of the following preparatory execution tasks:
- disengage parking brake,
- setup break pressure,
- change to gear one or reverse gear,
- activate day time running lights or lights,
- turn the steering in a defined direction,
- adjust at least one sensor (e.g. a camera) of the vehicle in the defined direction.

This is based on the rationale that a start of the vehicle can be a maneuver with many preparatory execution tasks (preparation tasks) that cause an unwanted latency, if they are linked directly to the steering command without the preparation signal.

The invention also comprises embodiments that provide features which afford additional technical advantages.

One embodiment comprises that for generating the steering command the command center receives "steering data" from a user interface that is operated by a human operator. For example, the user interface may provide a steering wheel and/or a brake pedal and/or an acceleration pedal such that the human operator may operate the user interface as though the operator was situated in the vehicle itself. Operating these elements of the user interface generates the steering data. For generating the preparation signal the command center receives "intention data" from the user interface. By means of the intention data the operator may signal, which driving manoeuver is to be performed next, i.e. which change of driving state is intended next. A corresponding preparation signal may be chosen and sent out to the vehicle before the steering data are generated. Thus, the latency can be reduced by means of the preparation signal, the reaction of the vehicle to the operation of the user interface, i.e. the generation of the steering data, is then more prompt than without the use of the preparation signal.

For generating the intention data, one embodiment comprises that the user interface comprises at least one "intention signaling element" that generates the intention data if operated by the operator. The intention signaling element comprises at least one selection button for selecting a respective driving maneuver and if the respective selection button is operated, intention data associated with this selection button are signaled. In other words, by pressing the corresponding button, intention data for a certain driving manoeuver, for example turning left or right or accelerating or braking, may be signaled or generated. When the operator later turns the driving wheel of the user interface and/or operates a pedal, the steering data for triggering the actual steering command follow. Additionally or alternatively to the at least one selection button an observation circuitry detects at least one predefined operator behavior (e.g. looking in the side mirror and/or back mirror) associated with the initiation of the driving maneuver. If such an operator behavior is detected, associated intention data for the driving maneuver are signaled. For example, an operator behavior may be the operator looking in the side mirror or back mirror and/or the turning of the head to one side. This may be interpreted as the intention to turn the vehicle left or right (depending on the direction that the operator is looking at). Likewise, a foot of the operator may be observed for detecting a change of the position of the foot, for example the placement of the foot on the accelerator pedal or the brake pedal. The observation circuitry may comprise a camera with an image processing circuitry and/or a proximity and/or pressure sensor for a pedal. The association of sensor data (e.g. image data) with a specific driving manoeuver may be performed on the basis of a machine learning algorithm that may be implemented on the basis of an artificial neural network.

One embodiment comprises that the "intention data" directly indicate the one specific driving maneuver and the preparation signal triggers one or some or all of the execution tasks that do not change the driving state. In other words, for each driving manoeuver specific or individual intention data are provided.

Alternatively, the indention data only indicate a class of driving maneuvers that have in common at least one common execution task that does not change the driving state. For example, the intention data may prepare the vehicle for heading forward or heading into a left direction or right direction, without specifying a specific driving manoeuver, for example the trajectory. For example, if the class of driving manoeuver is "deceleration", this may comprise several driving manoeuvers, for example braking, rolling out, opening the clutch which all decelerate the vehicle. The preparation signal then triggers the at least one common execution tasks in the vehicle and the vehicle may then wait for the more specific steering command for finalizing the driving maneuver.

One embodiment comprises that the class of driving maneuvers is a selection out of several different pre-defined maneuver classes of driving maneuvers. These maneuver classes comprise at least one of the following: driving forwards, driving backwards, heading left, heading right, overtaking, starting the vehicle from standstill, braking the vehicle into standstill. In other words, each maneuver class defines the basic common execution tasks for driving in a general direction or aiming at a general goal and especially without defining the maneuver details, like, e.g., a trajectory.

The respective specific execution task that is triggered by the preparation signal (i.e. the respective preparation task) can only be triggered as part of a preparation signal, i.e. it is an embedded task. One embodiment comprises that one or some or any execution task that is triggered by the preparation signal (i.e. the preparation tasks) is an embedded task that is not represented on the user interface by a dedicated operating element (e.g. a button).

One embodiment comprises that after the preparation signal has been sent to the vehicle, the command center starts a timer for measuring a predefined waiting time and if the command center does not receive the corresponding steering data for the steering command within the waiting time, an undo signal is transmitted to the vehicle for undoing any execution task that was triggered by the preparation signal. The command center thus transmits the steering command only, if the corresponding user's steering data from the user interface are received within the waiting time. Otherwise, when the timer runs out and no steering data were received, an undo-signal is transmitted to the vehicle for undoing the any execution task (preparation task) that was triggered by the preparation signal. In other words, after the preparation signal has been sent to the vehicle and if no steering command follows, the vehicle is set back into the driving condition before the preparation signal, i.e. the vehicle is set back into the original driving state from before the preparation signal. This prepares the vehicle for the next preparation signal.

The method can be used for resolving a deadlock situation of the vehicle, if the vehicle is an autonomous vehicle or if a driver of the vehicle is unable to cope and asks for help at the command center. One embodiment comprises that the vehicle is controlled in the described way after the vehicle has been driving autonomously or by a driver and has detected a pre-defined deadlock situation causing the vehicle to stop moving and the command center has received a request of the vehicle to assist in resolving the deadlock situation and has started a tele-operated driving session. This provided the benefit that a human operator at the command center is available when the autonomous driving function of the vehicle or the driver is unable to resolve a driving situation itself (i.e. a deadlock situation).

One embodiment comprises that said deadlock situation describes a detection of an obstacle (e.g. a road-blocking vehicle with a breakdown) and/or a road situation (e.g. roadworks) in the surrounding or in a current trajectory of the vehicle, for which an autonomous driving maneuver is not available to the autonomous driving function of the vehicle. Such deadlock situations are possible to define precisely and the can also be reliably detected by the autonomous driving function.

The invention also comprises a command center for a tele-operated driving of a vehicle, wherein the command center comprises an electronic processing circuitry that is designed to perform a method according to the invention. The command center can be a building where a human operator may sit at a workstation that provides the described user interface for remotely controlling the vehicle. The electronic processing circuitry may comprise at least one microprocessor that is linked to a data storage. The data storage may store programming instructions that cause the at least one microprocessor to perform the described method when executed by the at least one microprocessor.

By combining the command center and at least one vehicle of the described kind, a system is obtained that is also part of the invention. The invention also comprises this system with a command center according to the invention and a vehicle that is designed to receive at least one preparation signal and execute the execution tasks associated with the respective preparation signal (i.e. the preparation tasks) and that is further designed to receive at least one steering command and change a driving state, in particular turn a steering and/or accelerate and/or decelerate, according to the steering command.

The invention also comprises the combinations of the features of the different embodiments.

In the following exemplary implementations of the invention are described. The figures show:
- Fig. 1: a schematic illustration of an embodiment of the inventive system;
- Fig. 2: a diagram for illustrating the effect of a preparation signal; and
- Fig. 3: a schematic illustration of a workstation at a command center of the system of Fig. 1.

The embodiments explained in the following are a preferred embodiments of the invention. However, in the embodiments, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

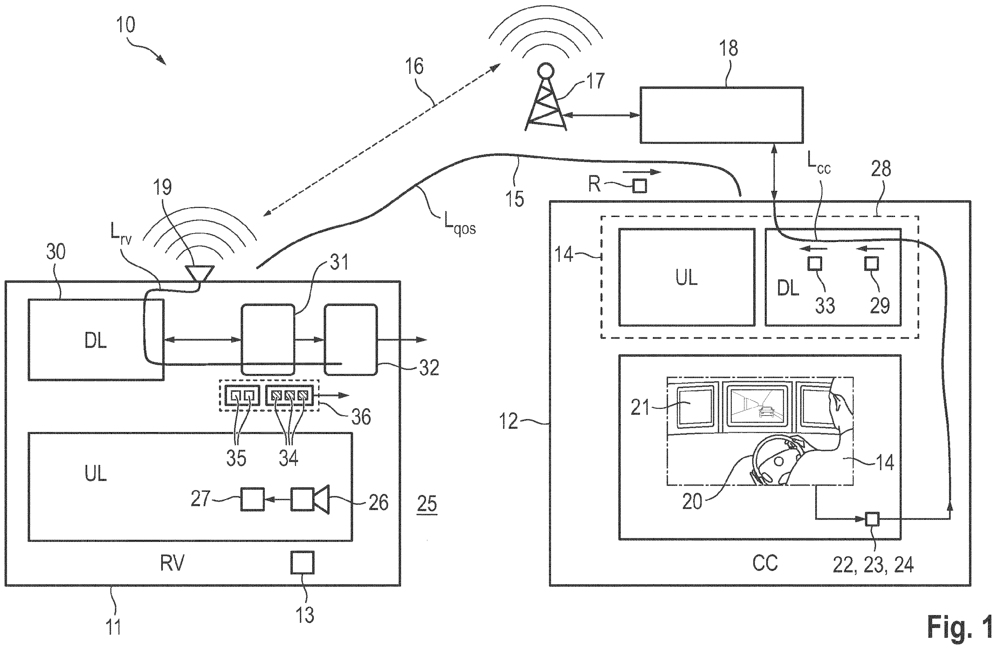

Fig. 1 shows a system 10 with a vehicle 11 and a command center 12 (CC) for remotely controlling or operating the vehicle 11 for performing driving maneuvers. From the perspective of the command center 12, the vehicle 11 therefore is a remote vehicle RV. The vehicle 11 may comprise an autonomous driving function 13 for driving the vehicle 11 autonomously without the support of a human driver (AV - autonomous vehicle). However, when the autonomous driving function 13 detects a deadlock situation for which a driving manoeuver is not available in the autonomous driving function 13, the vehicle may request the support of an operator 14 in the command center 12 by means of a request message R. For a communication between the vehicle 11 (e.g. an electronic processing circuitry or central computer of the vehicle 11) and a processing circuitry CPU of the command center 12, a communication link 15 may be established. Communication in 15 may be based on a wireless connection 16, for example based on a cellular network 17 and/or Wi-Fi, and/or an Internet connection over the Internet at 18. Vehicle 11 may comprise a corresponding communication unit 19 for the wireless connection 16.

The operator 14 may handle a workstation 20 that provides a user interface 21 for receiving input data 22 from the operator 14. Such input data 22 may comprise steering data 23 that describe a driving manoeuver intended by the operator 14 and intention data 24 that indicate which driving manoeuver the operator 14 is planning the next.

For this tele-operated driving of the vehicle 11, the command center 12 may perform a method, wherein based on the request message R, the operator 14 at the command center 12 monitors surrounding 25 of the vehicle 11 and/or assesses the conflicting situation on the basis of the at least one sensor 26 of the vehicle 11. The at least one sensor 26 may provide sensor data 27 of the surroundings 25 and the sensor data 27 may be transmitted to the control center 12 where they may be presented to the operator 14 by the user interface 21. In the control center 12 the sensor data 27 may be received by an uplink controller UL for receiving, for example, video data. The uplink controller UL may comprise a video codec for presenting your information to the operator 14 that may be provided by one or more than one sensor 26 of the vehicle 11 that may be designed as a camera.

Depending on the observed conflicting situation, the operator 14 at the command center 12 may decide a respective control strategy of the vehicle 11. The respective control strategy describes a direct control (e.g. a closed loop control) and/or an indirect control (e.g. supervisory control by monitoring and giving high-level commands to the vehicle) of the vehicle 11 by the operator 14 at the command center 12. The control center 12 may comprise a downlink control 28 for a downlink connection to the vehicle 11. Depending on the input data 22, the downlink control 28 may generate at least one steering command 29 for setting a steering angle and/or an acceleration and/or braking force for vehicle 11.

Vehicle 11 may comprise a downlink control 30 that may receive the steering command 29 and may provide for the downlink DL the command to a controller 31 that may control at least one actuator 32 for driving vehicle 11.

One use case of tele-operated driving ToD is the resolution of said deadlock situation by the command center CC. Two types of controls in the downlink DL may be distinguished: direct and indirect control.

Fig. 1 also depicts in addition to the ToD architecture of the system 10, its latencies in the downlink DL. In particular, the total latency in the DL is obtained by summing up three latencies: latencies at the remote vehicle Lᵣᵥ (including latencies of controller, sensors and actuators in the vehicle), latencies in the communication network L_{qos} and latencies at the command center CC, i.e. L_{cc} (including reaction time of the human operator 14 or driver). Besides the latencies L_{cc} at the command center CC, the remote vehicle 11 contributes significantly to the total latency.

In order to reduce the operational delay, the latency Lᵣᵥ in the autonomous vehicle 11 is reduced. This is done by having the command center CC sending a preceding "early steering signal" or preparation signal 33 to the vehicle 11 before sending the actual steering command for a specific driving maneuvers.

In particular, a preparation signal 33 makes the vehicle 11 aware of or prepare for the intended maneuver of the operator 14 at command center CC. Receiving this preparation signal 33, the vehicle 11 may trigger and execute preparation tasks 34 such as:
- Disengage parking brake and/or
- Reduce brake pressure and/or
- Change gears
that will not change the driving state itself, i.e. the speed and the steering of the autonomous vehicle AV will not change.

After the preparation tasks 34 are completed, the vehicle 11 is prepared to immediately perform remaining driving tasks 35 that actually cause the vehicle 11 to change its driving state. The driving tasks 35 may be triggered by the steering command 29.

Correspondingly, the following steps may be performed by the system 10 for performing a driving manoeuver with the autonomous vehicle 11.

Once the ToD session is started (meaning that the vehicle 11 already detected the deadlock, stopped in a safe state and called the CC by means of the request message R), the steps can be:
1. CC decides for a solution e.g. CC will steer AV by direct control in drive direction. This can be done by the operator 14.
2. CC sends a "early steering signal", i.e. the preparation signal 33, which includes the intention of the solution of the previous step and triggers the at least one preparation task 34 e.g.:
   - Disengage parking brake
   - Setup brake pressure for normal brake
   - Change to gear one
   - Chose daytime running lights
3. The vehicle 11 prepares for at least one upcoming steering command 29 from CC.
4. CC sends steering signals or steering commands 29 to the vehicle 11.

Step number 2 will be the main impacting step in the delay reduction.

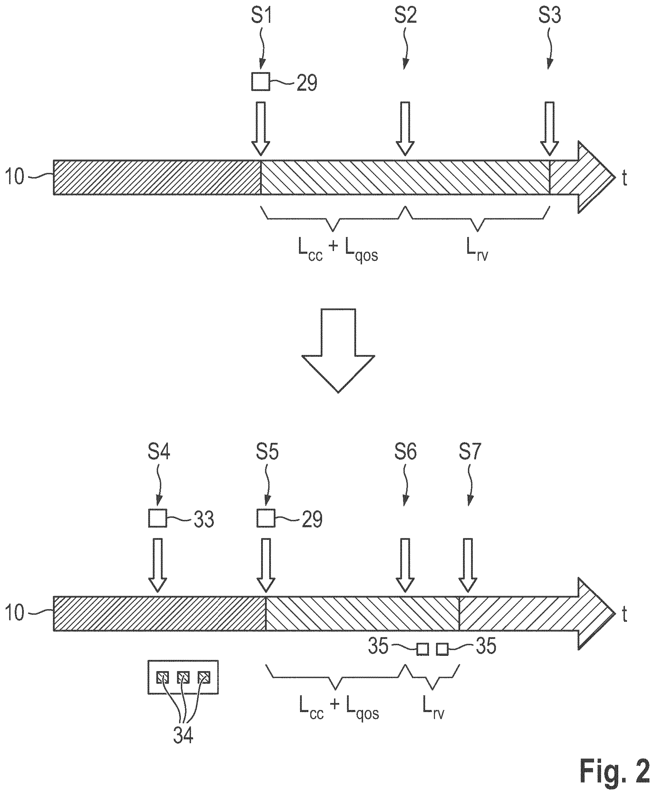

Fig. 2 illustrates this by a comparison of the reduction of the "Remote Vehicle Latency" (Lᵣᵥ) by using "early steering signal" or preparation signal 33 at the command center CC. The top time line illustrates over time t that at a step S1 the command center 12 may send a steering command 29 to the vehicle 11 without any preceding preparation signal. Once the vehicle 11 receives the steering command 29 in a step S2, the vehicle 11 has to perform all execution tasks 36 belonging to the intended driving manoeuver. The execution tasks 36 comprise both the preparation tasks 34 and the driving tasks 35. At a step S3 the driving manoeuver is finished or completed by executing all execution tasks 36 resulting in remove vehicle latency Lᵣᵥ.

By introducing the preparation signal 33, the bottom timeline results. In a step S4 the command center 12 sends the preparation signal 33 such that vehicle 11 will perform or execute the preparation tasks 34 as preparatory execution tasks. When at a step S5 the command center 12 sends the actual steering command 29 for changing the driving state for the driving manoeuver, the preparation tasks 34 belonging to this driving manoeuver have already been executed such that the vehicle only needs to perform the remaining driving tasks 35 of the set of execution tasks 36 belonging to the driving manoeuver. Thus, after receiving the steering command 29 in a step S6, vehicle may react or respond to the steering command 29 by finishing the driving manoeuver in a step S7 with a shortened latency Lᵣᵥ.

In the step S4, in the command center it must be known which preparation signal 33 is to be sent or in other words what is the intention of the operator 14. To this end, the workstation 20 comprises the ability to generate intention data 24 that indicate which preparation signal 33 is to be sent, i.e. which at least one preparation task is to be executed by the vehicle 11.

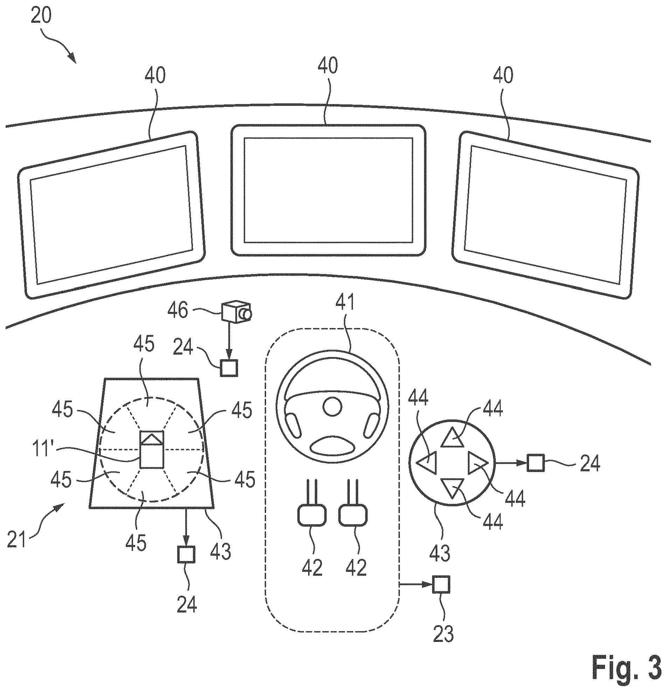

Fig. 3 illustrates an exemplary workstation 20 like it may be provided in the command center 12. For generating the steering data 23, presenting the sensor data 27, at least one display 40 may be provided in the workstation 20. For generating the steering data 23, the workstation 20 may comprise, for example, a steering wheel 41 and/or at least one pedal 42 for accelerating and/or braking the vehicle 11.

For generating the preparation signal 33, the corresponding intention data 24 may be generated by an intention signaling element 43 that may comprise at least one button 44 that the operator 14 may press to indicate whether the operator 14 intends to drive forwards or backwards or left or right as a general maneuver class. Additionally or alternatively, an intention signaling element 43 may be provided where the operator 14 may indicate a sector 45 around the vehicle 11 (represented for example by a symbol 11'). Each sector 45 may indicate a class of driving manoeuvers that lead or drive the vehicle 11 into the respective sector 45 (e.g. front, forward left, forward right, backwards, backwards left, backwards right).

Additionally or alternatively an observation circuitry 46 may observe the operator 14 and may estimate or derive the intention data 24 depending on an observed behavior or a movement of the operator 14, for example when the operator 14 turns the head and observes a region to the left of the vehicle 11, the intention data 24 may indicate that the operator 14 intends to perform a driving manoeuver for turning the vehicle 11 to the left.

The described elements of the workstation 20 constitute the user interface 21.

Overall, the example shows how a method for setting-up a quick start of a remote vehicle is provided by the invention.

### Reference signs

- 10: system
- 11: vehicle
- 12: center
- 13: autonomous driving function
- 14: operator
- 15: link
- 16: connection
- 17: network
- 19: communication unit
- 20: workstation
- 21: user interface
- 22: input data
- 23: intention data
- 24: steering data
- 25: surroundings
- 26: sensor
- 27: sensor data
- 28: downlink control
- 29: steering command
- 30: uplink control
- 31: controller
- 32: actuator
- 33: preparation signal
- 34: execution task
- 40: display
- 41: wheel
- 42: pedal
- 43: operating element
- 44: button
- 45: sector
- 46: observation circuitry

## Claims

1. Method for a tele-operated driving of a vehicle (11), wherein the vehicle (11) is controlled from a command center (12) via a communication network (17) and wherein the method comprises that the command center (12) transmits a steering command (29) to the vehicle (11) over the communication network (17) to change a driving state of the vehicle (11) in order to execute a driving maneuver, the method being **characterised in that**:
the driving maneuver comprises a sequence of execution tasks (36), which are split into preparation tasks for initiating or preparing the driving maneuver such that a current driving state of the vehicle (11) remains unchanged, and driving tasks for actually or finally changing the driving state of the vehicle (11) for the driving maneuver, wherein the change of the driving state means that the steering command changes a driving speed and/or a steering angle, and
before the steering command (29) is transmitted to the vehicle (11), the command center (12) transmits a separate preparation signal (33) to the vehicle (11) for triggering some or all of those of the preparation tasks for which the current driving state of the vehicle (11) remains unchanged and the following steering command (29) comprises at least one remaining final driving task that causes the vehicle (11) to change its driving state according to the driving maneuver,
wherein the driving maneuver is a start of the vehicle (11) from standstill and the preparation signal (33) triggers one or some or all of the following preparation tasks:
- disengage parking brake,
- setup brake pressure,
- change to gear one or reverse gear,
- activate day time running lights or lights,
- turn the steering in a defined direction,
- adjust at least one sensor (26) of the vehicle (11) in the defined direction.

2. Method according to claim 1, wherein for generating the steering command (29) the command center (12) receives steering data (23) from a user interface (21) that is operated by a human operator (14), and for generating the preparation signal (33) the command center (12) receives intention data (24) from the user interface (21).

3. Method according to claim 2, wherein the user interface (21) comprises an intention signaling element (43) that generates the intention data (24), wherein the intention signaling element (43) comprises
at least one selection button (44) for selecting a respective driving maneuver and if the respective selection button (44) is operated by the operator (14), intention data (24) associated with this selection button (44) are signaled, and/or an observation circuitry (46) that detects at least one predefined operator behavior associated with the initiation of the driving maneuver and if the operator behavior is detected, associated intention data (24) for the associated driving maneuver is signaled.

4. Method according to claim 2 or 3, wherein
- the intention data (24) directly indicate the one specific driving maneuver and the preparation signal (33) triggers one or some or all of those preparation tasks for that specific driving maneuver that do not change the driving state or
- wherein the intention data (24) indicate a class of driving maneuvers that have in common at least one common preparation task that does not change the driving state in any of these driving maneuvers and the preparation signal (33) triggers the at least one common preparation task.

5. Method according to claim 4, wherein the class of driving maneuvers is selected out of several different pre-defined maneuver classes of driving maneuvers, wherein the maneuver classes comprise at least one of the following: driving forwards, driving backwards, heading left, heading right, overtaking, starting the vehicle (11) from standstill.

6. Method according to any of the claims 2 to 5, wherein one or some or any preparation task that is triggered by the preparation signal (33) is an embedded task that is not represented on the user interface (21) for separate execution.

7. Method according to any of the claims 2 to 6, wherein after the preparation signal (33) has been sent to the vehicle (11), the command center (12) starts a timer for measuring a predefined waiting time and if the command center (12) does not receive the corresponding steering data (23) for the steering command (29) within the waiting time, an undo signal is transmitted to the vehicle (11) for undoing any preparation task that was triggered by the preparation signal (33).

8. Method according to any of the preceding claims, wherein the vehicle (11) is controlled after the vehicle (11) has been driving autonomously and has detected a pre-defined deadlock situation causing the vehicle (11) to stop moving and after the command center (12) has received a request of the vehicle (11) to assist in resolving the deadlock situation and has started a tele-operated driving session.

9. Method according to claim 8, wherein the deadlock situation describes a detection of an obstacle and/or a road situation in a surrounding (25) or along a current trajectory of the vehicle (11), for which an autonomous drive maneuver is not available to the vehicle (11).

10. Command center for a tele-operated driving of a vehicle (11), wherein the command center (12) comprises an electronic processing circuitry, wherein the electronic processing circuitry comprises at least one microprocessor that is linked to a data storage, wherein the data storage stores programming instructions that - when executed by the at least one microprocessor - cause the at least one microprocessor to perform the method steps of a method according to any of the preceding claims.

11. System with a command center (12) according to claim 10 and a vehicle (11), comprising a downlink control (30) for receiving a steering command (29) and a controller (31) for controlling at least one actuator of the vehicle (11) based on the steering command (29), such that the vehicle (11) is designed to receive at least one preparation signal (33) and execute preparation tasks associated with the respective preparation signal (33), and to receive at least one steering command (29) and change a driving state, in particular turn a steering and/or accelerate and/or decelerate, according to the steering command (29).

## Patentansprüche

1. Verfahren für ein ferngesteuertes Fahren eines Fahrzeugs (11), wobei das Fahrzeug (11) via ein Kommunikationsnetzwerk (17) von einer Befehlszentrale (12) gesteuert wird und wobei das Verfahren umfasst, dass die Befehlszentrale (12) einen Lenkbefehl (29) des Fahrzeugs (11) über das Kommunikationsnetzwerk (17) überträgt, um einen Fahrzustand des Fahrzeugs (11) zu ändern, um ein Fahrmanöver auszuführen, wobei das Verfahren **dadurch gekennzeichnet ist, dass**:
das Fahrmanöver eine Folge von Ausführungsaufgaben (36) umfasst, die in Vorbereitungsaufgaben zum Initiieren oder Vorbereiten des Fahrmanövers derart, dass der aktuelle Fahrzustand des Fahrzeugs (11) unverändert bleibt, und Fahraufgaben zum tatsächlichen oder endgültigen Ändern des Fahrzustands des Fahrzeugs (11) für das Fahrmanöver unterteilt sind, wobei die Änderung des Fahrzustands bedeutet, dass der Lenkbefehl eine Fahrgeschwindigkeit und/oder einen Lenkwinkel ändert, und
bevor der Lenkbefehl (29) zum Fahrzeug (11) übertragen wird, die Befehlszentrale (12) ein separates Vorbereitungssignal (33) zum Fahrzeug (11) zum Auslösen von einigen oder allen jener Vorbereitungsaufgaben überträgt, für die der aktuelle Fahrzustand des Fahrzeugs (11) unverändert bleibt, und der folgende Lenkbefehl (29) mindestens eine verbleibende endgültige Fahraufgabe umfasst, die das Fahrzeug (11) veranlasst, seinen Fahrzustand gemäß dem Fahrmanöver zu ändern,
wobei das Fahrmanöver ein Start des Fahrzeugs (11) aus einem Stillstand ist und das Vorbereitungssignal (33) eine oder einige oder alle der folgenden Vorbereitungsaufgaben auslöst:
- Lösen einer Feststellbremse,
- Aufbauen eines Bremsdrucks,
- Schalten in den ersten Gang oder den Rückwärtsgang,
- Aktivieren des Tagfahrlichts,
- Drehen der Lenkung in eine definierte Richtung,
- Anpassen von mindestens einem Sensor (26) des Fahrzeugs (11) in die definierte Richtung.

2. Verfahren nach Anspruch 1, wobei zum Erzeugen des Lenkbefehls (29) die Befehlszentrale (12) Lenkdaten (23) von einer Benutzerschnittstelle (21) empfängt, die von einem menschlichen Bediener (14) bedient wird, und zum Erzeugen des Vorbereitungssignals (33) die Befehlszentrale (12) Absichtsdaten (24) von der Benutzerschnittstelle (21) empfängt.

3. Verfahren nach Anspruch 2, wobei die Benutzerschnittstelle (21) ein Absichtssignalisierungselement (43) umfasst, das die Absichtsdaten (24) erzeugt, wobei das Absichtssignalisierungselement (43) Folgendes umfasst mindestens eine Auswahltaste (44) zum Auswählen eines jeweiligen Fahrmanövers und wenn die jeweilige Auswahltaste (44) vom Bediener (14) betätigt wird, werden Absichtsdaten (24), die mit der Auswahltaste (44) verknüpft sind, signalisiert und/oder
eine Beobachtungsschaltung (46), die mindestens ein vordefiniertes Bedienerverhalten detektiert, das mit der Initiierung des Fahrmanövers verknüpft ist, und wenn das Bedienerverhalten detektiert wird, werden verknüpfte Absichtsdaten (24) für das verknüpfte Fahrmanöver signalisiert.

4. Verfahren nach Anspruch 2 oder 3, wobei
- die Absichtsdaten (24) direkt das eine spezifische Fahrmanöver anzeigen und das Vorbereitungssignal (33) eine oder einige oder alle jener Vorbereitungsaufgaben für das spezifische Fahrmanöver auslöst, die den Fahrzustand nicht ändern, oder
- wobei die Absichtsdaten (24) eine Klasse von Fahrmanövern anzeigen, die mindestens eine gemeinsame Vorbereitungsaufgabe gemeinsam haben, die den Fahrzustand bei keinem dieser Fahrmanöver ändert, und das Vorbereitungssignal (33) die mindestens eine gemeinsame Vorbereitungsaufgabe auslöst.

5. Verfahren nach Anspruch 4, wobei die Klasse von Fahrmanövern aus mehreren verschiedenen vordefinierten Manöverklassen von Fahrmanövern ausgewählt wird, wobei die Manöverklassen mindestens eines von Folgendem umfassen: Vorwärtsfahren, Rückwärtsfahren, Fahren nach links, Fahren nach rechts, Überholen, Starten des Fahrzeugs (11) aus dem Stillstand.

6. Verfahren nach einem der Ansprüche 2 bis 5, wobei eine oder einige oder jede Vorbereitungsaufgabe, die vom Vorbereitungssignal (33) ausgelöst wird, eine eingebettete Aufgabe ist, die auf der Benutzerschnittstelle (21) nicht für eine separate Ausführung repräsentiert ist.

7. Verfahren nach einem der Ansprüche 2 bis 6, wobei, nachdem das Vorbereitungssignal (33) an das Fahrzeug (11) gesendet wurde, die Befehlszentrale (12) zum Messen einer vordefinierten Wartezeit einen Timer startet, und wenn die Befehlszentrale (12) die entsprechenden Lenkdaten (23) für den Lenkbefehl (29) nicht innerhalb der Wartezeit empfängt, ein Aufhebungssignal zum Fahrzeug (11) zum Aufheben einer Vorbereitungsaufgabe übertragen wird, die vom Vorbereitungssignal (33) ausgelöst wurde.

8. Verfahren nach einem der vorhergehenden Ansprüche, wobei, nachdem das Fahrzeug (11) autonom gefahren war und eine vordefinierte Blockierungssituation detektiert hat, die das Fahrzeug (11) veranlasst, sich nicht mehr zu bewegen, und nachdem die Befehlszentrale (12) eine Anforderung des Fahrzeugs (11) zur Unterstützung bei der Auflösung der Blockierungssituation empfangen und eine ferngesteuerte Fahrsitzung gestartet hat, das Fahrzeug (11) gesteuert wird.

9. Verfahren nach Anspruch 8, wobei die Blockierungssituation eine Detektion eines Hindernisses und/oder eine Straßensituation in einer Umgebung (25) oder entlang einer aktuellen Trajektorie des Fahrzeugs(11) beschreibt, für die ein autonomes Fahrmanöver für das Fahrzeug (11) nicht verfügbar isr.

10. Befehlszentrale für ein ferngesteuertes Fahren eines Fahrzeugs (11), wobei die Befehlszentrale (12) eine elektronische Verarbeitungsschaltung umfasst, wobei die elektronische Verarbeitungsschaltung mindestens einen Mikroprozessor umfasst, der mit einem Datenspeicher verbunden ist, wobei im Datenspeicher Programmieranweisungen gespeichert sind, die, wenn sie von dem mindestens einen Mikroprozessor ausgeführt werden, den mindestens einen Mikroprozessor veranlassen, die Verfahrensschritte eines Verfahrens nach einem der vorhergehenden Ansprüche durchzuführen.

11. System mit einer Befehlszentrale (12) nach Anspruch 10 und einem Fahrzeug (11), das eine Downlinksteuerung (30) zum Empfangen eines Lenkbefehls (29) und eine Steuerung (31) zum Steuern von mindestens einem Aktuator des Fahrzeugs (11) auf Basis des Lenkbefehls (29) umfasst, derart, dass das Fahrzeug (11) dazu ausgelegt ist, mindestens ein Vorbereitungssignal (33) zu empfangen und mit dem jeweiligen Vorbereitungssignal (33) verknüpfte Vorbereitungsaufgaben auszuführen und mindestens einen Lenkbefehl (29) zu empfangen und einen Fahrzustand zu ändern, insbesondere gemäß dem Lenkbefehl (29) eine Lenkung zu drehen und/oder zu beschleunigen und/oder zu verzögern.

## Revendications

1. Procédé de conduite télécommandée d'un véhicule (11), dans lequel le véhicule (11) est commandé à partir d'un centre de commande (12) par l'intermédiaire d'un réseau de communication (17) et dans lequel le procédé comprend le fait que le centre de commande (12) transmet une instruction de direction (29) au véhicule (11) sur le réseau de communication (17) pour changer un état de conduite du véhicule (11) afin d'exécuter une manœuvre de conduite, le procédé étant **caractérisé en ce que** :
la manœuvre de conduite comprend une séquence de tâches d'exécution (36), qui sont divisées en des tâches de préparation pour lancer ou préparer la manœuvre de conduite de telle sorte qu'un état de conduite actuel du véhicule (11) reste inchangé, et des tâches de conduite pour changer réellement ou finalement l'état de conduite du véhicule (11) pour la manœuvre de conduite, dans lequel le changement de l'état de conduite signifie que l'instruction de direction change une vitesse de conduite et/ou un angle de direction, et
avant que l'instruction de direction (29) soit transmise au véhicule (11), le centre de commande (12) transmet un signal de préparation distinct (33) au véhicule (11) pour déclencher certaines ou la totalité des tâches de préparation pour lesquelles l'état de conduite actuel du véhicule (11) reste inchangé et l'instruction de commande (29) suivante comprend au moins une tâche de conduite finale restante qui amène le véhicule (11) à changer son état de conduite en fonction de la manœuvre de conduite,
dans lequel la manœuvre de conduite est un démarrage du véhicule (11) à l'arrêt et le signal de préparation (33) déclenche une ou certaines ou la totalité des tâches de préparation suivantes :
- libérer le frein de stationnement,
- établir une pression de frein,
- passer la première vitesse ou la marche arrière,
- activer les feux de jour ou les phares,
- tourner la direction dans une direction définie,
- ajuster au moins un capteur (26) du véhicule (11) dans la direction définie.

2. Procédé selon la revendication 1, dans lequel pour générer l'instruction de direction (29), le centre de commande (12) reçoit des données de direction (23) en provenance d'une interface utilisateur (21) qui est actionnée par un opérateur humain (14), et pour générer le signal de préparation (33), le centre de commande (12) reçoit des données d'intention (24) en provenance de l'interface utilisateur (21).

3. Procédé selon la revendication 2, dans lequel l'interface utilisateur (21) comprend un élément de signalisation d'intention (43) qui génère les données d'intention (24), dans lequel l'élément de signalisation d'intention (43) comprend
au moins un bouton de sélection (44) pour sélectionner une manœuvre de conduite respective et si le bouton de sélection (44) respectif est actionné par l'opérateur (14), des données d'intention (24) associées à ce bouton de sélection (44) sont signalées, et/ou un circuit d'observation (46) qui détecte au moins un comportement d'opérateur prédéfini associé au lancement de la manœuvre de conduite et si le comportement d'opérateur est détecté, des données d'intention (24) associées pour la manœuvre de conduite associée sont signalées.

4. Procédé selon la revendication 2 ou 3, dans lequel
- les données d'intention (24) indiquent directement la manœuvre de conduite spécifique et le signal de préparation (33) déclenche une ou certaines ou la totalité des tâches de préparation pour cette manœuvre de conduite spécifique qui ne changent pas l'état de conduite, ou
- les données d'intention (24) indiquent une classe de manœuvres de conduite qui ont en commun au moins une tâche de préparation commune qui ne change pas l'état de conduite dans l'une quelconque de ces manœuvres de conduite et le signal de préparation (33) déclenche l'au moins une tâche de préparation commune.

5. Procédé selon la revendication 4, dans lequel la classe de manœuvres de conduite est sélectionnée parmi plusieurs classes de manœuvres prédéfinies différentes de manœuvres de conduite, dans lequel les classes de manœuvres comprennent au moins l'un des éléments suivants : conduite vers l'avant, conduite vers l'arrière, cap à gauche, cap à droite, dépassement, démarrage du véhicule (11) à l'arrêt.

6. Procédé selon l'une quelconque des revendications 2 à 5, dans lequel une ou certaines ou l'une quelconque des tâches de préparation qui est déclenchée par le signal de préparation (33) est une tâche intégrée qui n'est pas représentée sur l'interface utilisateur (21) pour une exécution séparée.

7. Procédé selon l'une quelconque des revendications 2 à 6, dans lequel après que le signal de préparation (33) a été envoyé au véhicule (11), le centre de commande (12) démarre un temporisateur pour mesurer un temps d'attente prédéfini et si le centre de commande (12) ne reçoit pas les données de direction correspondantes (23) pour l'instruction de direction (29) dans le temps d'attente, un signal d'annulation est transmis au véhicule (11) pour annuler toute tâche de préparation qui a été déclenchée par le signal de préparation (33).

8. Procédé selon l'une quelconque des revendications précédentes, dans lequel le véhicule (11) est commandé après que le véhicule (11) a été conduit de manière autonome et a détecté une situation de blocage prédéfinie amenant le véhicule (11) à arrêter de se déplacer et après que le centre de commande (12) a reçu une demande du véhicule (11) pour aider à résoudre la situation de blocage et a démarré une session de conduite télécommandée.

9. Procédé selon la revendication 8, dans lequel la situation de blocage décrit une détection d'un obstacle et/ou une situation de route dans un environnement (25) ou le long d'une trajectoire actuelle du véhicule (11), pour laquelle une manœuvre de conduite autonome n'est pas disponible pour le véhicule (11).

10. Centre de commande pour une conduite télécommandée d'un véhicule (11), dans lequel le centre de commande (12) comprend un circuit de traitement électronique, dans lequel le circuit de traitement électronique comprend au moins un microprocesseur qui est lié à un stockage de données, dans lequel le stockage de données stocke des instructions de programmation qui, lorsqu'elles sont exécutées par l'au moins un microprocesseur, amènent l'au moins un microprocesseur à mettre en œuvre les étapes de procédé d'un procédé selon l'une quelconque des revendications précédentes.

11. Système avec un centre de commande (12) selon la revendication 10 et un véhicule (11), comprenant une commande de liaison descendante (30) pour recevoir une instruction de direction (29) et un dispositif de commande (31) pour commander au moins un actionneur du véhicule (11) sur la base de l'instruction de direction (29), de telle sorte que le véhicule (11) est conçu pour recevoir au moins un signal de préparation (33) et exécuter des tâches de préparation associées au signal de préparation (33) respectif, et pour recevoir au moins une instruction de direction (29) et changer un état de conduite, en particulier tourner une direction et/ou accélérer et/ou décélérer, en fonction de l'instruction de direction (29).
